# EUROPÄISCHE PATENTANMELDUNG

(11) **EP 1 688 350 A2**
(43) Veröffentlichungstag der Anmeldung: **09.08.2006**
(21) Anmeldenummer: 06002009.6
(22) Anmeldetag: 01.02.2006
(51) Int. Cl.: B64G 1/44

(54) **Solarzellenausleger**

(30) Priorität: 02.02.2005 DE 102005004922
(71) Anmelder: EADS Astrium GmbH, 81663 München (DE)
(72) Erfinder: Loew, Herbert, D-82054 Sauerlach (DE); Weimer, Peter, 88677 Markdorf (DE); Wiedermann, Georg, Dr., 88677 Markdorf (DE)
(74) Vertreter: Hummel, Adam

(57) **Zusammenfassung**

Ein Solarzellenausleger, der aus einem kompakten verstaubaren Lagerzustand in einen expandierten Einsatzzustand bringbar ist, mit einer Entfaltstruktur (2) und einem an der Entfaltstruktur (2) gehalterten und zumindest eine mit Solarzellen versehene Trägerbahn (30) aufweisenden Solarzellenträger (3) ist dadurch gekennzeichnet, dass die Solarzellen flexibel ausgebildet sind, dass der Solarzellenträger (3) flexibel und aufrollbar ausgebildet ist und dass die Entfaltstruktur (2) eine Aufrolleinrichtung für den Solarzellenträger (3) aufweist.

## Beschreibung

Die Erfindung betrifft einen Solarzellenausleger nach dem Oberbegriff des Patentanspruchs 1.

Derartige Solarzellenausleger werden im Weltraum zur Stromversorgung von Raumfahrzeugen, insbesondere von Satelliten oder Raumstationen, verwendet und sind allgemein bekannt. Bei solchen bekannten Solarzellenauslegern ist der Solarzellenträger üblicherweise in Querrichtung zickzack gefaltet und wird dann im Weltraum in seinen Einsatzzustand gebracht, indem er ziehharmonikaartig entfaltet wird.

Eine derartige Konstruktion besitzt den Nachteil, dass der Solarzellenträger eine Vielzahl von Gelenken aufweisen muss, die nicht nur der mechanischen Verbindung der einzelnen quer verlaufenden Streifen des Solarzellenträgers dienen, sondern dass auch die elektrische Verbindung der auf den einzelnen Streifen vorgesehenen Solarzellen untereinander über die Gelenke hinweg gewährleistet werden muss. Diese Konstruktion ist somit nicht nur aufwendig, sondern sie stellt auch potentielle Fehlerquellen dar, die im Weltraum zum gesamten Ausfall des Solarzellenauslegers führen können.

Außerdem sind die Abmessungen dieser bekannten Konstruktionen prinzipbedingt verhältnismäßig groß, so dass dieses Bauprinzip für kleine Satelliten weniger geeignet ist.

Aufgabe der vorliegenden Erfindung ist es daher, einen verbesserten gattungsgemäßen Solarzellenausleger anzugeben, der für den Transport auch an einem kleinen Satelliten kompakt verstaubar ist und der bei geringem Eigengewicht schnell und zuverlässig in einen expandierten Einsatzzustand bringbar und kostengünstig herstellbar ist.

Diese Aufgabe wird durch die im kennzeichnenden Teil des Patentanspruchs 1 angegebenen Merkmale gelöst.

Durch die Verwendung von flexiblen Solarzellen und eines flexiblen und aufrollbaren Solarzellenträgers, der auf eine Aufrolleinrichtung an der Entfaltstruktur aufrollbar ist, wird ein rolloartig ausziehbarer Solarzellenträger geschaffen, der selbst keine Gelenke und somit keine Knickstellen aufweist. Die genannten Nachteile des ziehharmonikaartig entfaltbaren Solarzellenträgers des Standes der Technik werden dadurch überwunden.

Vorteilhafterweise weist die Aufrolleinrichtung eine Wickeltrommel auf, auf die der Solarzellenträger aufrollbar ist.

Besonders vorteilhaft ist es, wenn der Solarzellenträger aus einer Mehrzahl von nebeneinander angeordneten streifenförmigen Trägerbahnen besteht. Durch diese Aufteilung des Solarzellenträgers in eine Mehrzahl von längs nebeneinander angeordneten streifenförmigen Trägerbahnen wird vermieden, dass der Solarzellenträger durch ungleichförmige Belastungen beim Expandieren des Solarzellenträgers Falten oder Beulen bildet. Derartige Falten oder Beulen führen dazu, dass die Ausrichtung der einzelnen Solarzellen des Solarzellenträgers zur Sonne ungleichmäßig ist, wodurch der Wirkungsgrad des Solarzellenauslegers herabgesetzt wird. Das Risiko des Entstehens derartiger Falten oder Beulen wird durch die Verwendung der schmaleren streifenförmigen Trägerbahnen, die nebeneinander angeordnet, aber lateral nicht miteinander verbunden sind, wesentlich reduziert.

Durch die Verwendung einer Mehrzahl von nebeneinander angeordneten streifenförmigen Trägerbahnen wird zudem ein modularer Aufbau des Solarzellenträgers geschaffen, der durch laterale Aneinanderreihung einer beliebigen Anzahl von als Gleichteile herstellbaren streifenförmigen Trägerbahnen gleicher oder unterschiedlicher Breite eine hochflexible Anpassung an die geforderten elektrischen Leistungseigenschaften des Solarzellenauslegers ermöglicht.

Vorzugsweise weist die Wickeltrommel für jede Trägerbahn eine eigene Halterungseinrichtung auf. Hierdurch wird erreicht, dass die einzelnen Trägerbahnen individuell an der Wickeltrommel gehaltert sind, wodurch das Risiko des Entstehens von Falten oder Beulen im Solarzellenträger weiter reduziert wird.

Eine besonders vorteilhafte Weiterbildung zeichnet sich dadurch aus, dass die Halterungseinrichtung innerhalb der Wickeltrommel vorgesehen ist, wobei die Wickeltrommel und/oder die Halterungseinrichtung einen sich in Axialrichtung der Wickeltrommel erstreckenden Längsschlitz aufweist, durch den die Trägerbahn in die Halterungseinrichtung einführbar und dort arretierbar ist. Bei dieser Ausführungsform ist die Befestigung einer jeden Trägerbahn an der Halterungseinrichtung durch die Lage innerhalb der Wickeltrommel gegenüber äußeren Einflüssen geschützt und beeinträchtigt nicht das Aufwickeln der Trägerbahnen auf die Wickeltrommel.

Vorzugsweise weist die Halterungseinrichtung jeweils einen sich in Längsrichtung der Wickeltrommel erstreckenden Befestigungsbalken für die jeweilige Trägerbahn auf. Diese Ausgestaltung sorgt für eine gleichmäßige Verteilung der Zugbelastung über die Breite der Trägerbahn.

Besonders vorteilhaft ist es, wenn der Befestigungsbalken im Bereich seiner axialen Enden in Radialrichtung der Wickeltrommel in der Halterungseinrichtung federnd gelagert ist. Diese federnde Lagerung sorgt dafür, dass jede Trägerbahn im expandierten Einsatzzustand des Solarzellenauslegers, das heißt im abgerollten Zustand der Trägerbahn, durch den Einfluss der Federkraft der federnden Lagerung straff gehalten wird, wodurch die Gefahr des Entstehens von Beulen oder Falten in der jeweiligen Trägerbahn und damit im gesamten Solarzellenträger weiter reduziert wird. Dadurch dass an jedem axialen Enden des Befestigungsbalken eine federnde Lagerung vorgesehen ist, können auch etwa auftretende Verkantungen des Befestigungsbalkens oder der Wickeltrommel in geringem Maße kompensiert werden, ohne dass in den einzelnen Trägerbahnen und damit im Solarzellenträger Falten oder Beulen entstehen.

Der Solarzellenträger weist vorzugsweise eine Entfaltstruktur auf, die versehen ist mit einer Basiseinheit, einer Strukturverbindungseinheit und einer die Basiseinheit und die Strukturverbindungseinheit miteinander verbindenden Entfaltungseinheit.

Vorzugsweise ist die Entfaltungseinheit mit einem ersten Gelenkarm und einem zweiten Gelenkarm versehen, die jeweils mit einem ersten Gelenk an der Basiseinheit und jeweils mit einem zweiten Gelenk an der Strukturverbindungseinheit gelenkig angebracht sind.

In weiterer bevorzugter Ausführung ist jeder Gelenkarm mit zumindest einem zwischen dem ersten Gelenk und dem zweiten Gelenk vorgesehenen weiteren Gelenk versehen. Diese Ausführung der Entfaltungseinheit arbeitet nach dem bekannten Pantograph-Prinzip und unterstützt bei der Verwendung von Gleichteilen den modularen Aufbau des Solarzellenauslegers.

Vorzugsweise weist die Basiseinheit Befestigungsmittel zur Anbringung des Solarzellenauslegers an einem Fahrzeug, insbesondere an einem Raumfahrzeug, auf. Hierdurch kann der Solarzellenausleger mit seiner Basiseinheit beispielsweise an einem Satelliten oder an einer Raumstation befestigt werden.

Vorzugsweise weisen die Befestigungsmittel einen Stellantrieb auf, mit dem der Solarzellenausleger um eine parallel zur Längsrichtung der Trägerbahnen verlaufende Achse verschwenkbar ist. Dieser Stellantrieb ermöglicht es, die Lage des Solarzellenauslegers um diese Schwenkachse auszurichten, um eine optimale Ausrichtung der Solarzellen zur Sonne zu erzielen.

In einer besonders bevorzugten Ausgestaltungsform ist die Wickeltrommel im Bereich der Strukturverbindungseinheit vorgesehen. Hierdurch wird ermöglicht, das der Basiseinheit benachbarte Ende einer jeweiligen Trägerbahn in einer definierten Position an der Basiseinheit ortsfest anzubringen.

Die vorgenannte Lage der Wickeltrommel im Bereich der Strukturverbindungseinheit ermöglicht es, die elektrischen Kontaktierungen einer jeden Trägerbahn für eine elektrische Verbindung der auf ihr vorgesehenen Solarzellen mit einem externen Verbraucher der Basiseinheit benachbart vorzusehen, so dass eine direkte und unmittelbare elektrische Verbindung zwischen der jeweiligen Trägerbahn und den an der Basiseinheit vorgesehenen elektrischen Leitungen ohne teure und fehleranfällige Schleifringverbindungen möglich ist, wodurch weiter potentielle Fehlerquellen vermieden werden.

Weitere bevorzugte und vorteilhafte Ausgestaltungsmerkmale des erfindungsgemäßen Solarzellenauslegers sind Gegenstand der weiteren Unteransprüche.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

In dieser zeigt:
- Fig. 1: einen erfindungsgemäßen Solarzellenausleger in drei Phasen während der Expansion,
- Fig. 2: einen teilexpandierten Solarzellenausleger gemäß Fig. 1 B,
- Fig. 3: einen vollständig expandierten Solarzellenausleger gemäß Fig. 1C,
- Fig. 4: die Anordnung von Solarzellen auf einer Trägerbahn,
- Fig. 5: eine Wickeltrommel eines erfindungsgemäßen Solarzellenauslegers und
- Fig. 6: eine in der Wickeltrommel vorgesehene Halterungseinrichtung.

### DARSTELLUNG VON BEVORZUGTEN AUSFÜHRUNGSBEISPIELEN

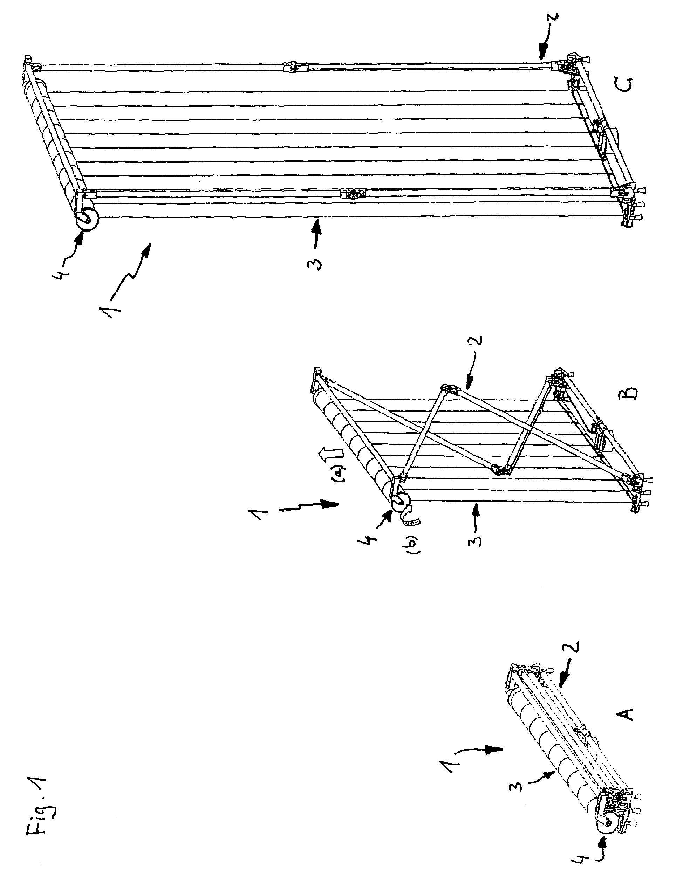

In Fig. 1 ist ein erfindungsgemäßer Solarzellenausleger 1 in drei Phasen des Expansionsvorgangs dargestellt. Fig. 1A zeigt den Solarzellenausleger in seinem verstaubaren Lagerzustand, in welchem er bei minimalen Bauraumbedarf in oder an einem Raumfahrzeug platzsparend anbringbar ist. In dieser so genannten Launchkonfiguration ist die Entfaltstruktur 2 zusammengefaltet und der Solarzellenträger 3 auf die Wickeltrommel 4 aufgerollt.

Fig. 1 B zeigt den Solarzellenausleger 1 kurz nach Beginn des Expansionsvorgangs. Die Entfaltstruktur 2 ist bereits teilweise entfaltet worden und der Solarzellenträger 3 ist bereits teilweise von der Wickeltrommel 4 abgerollt worden. Dabei zeigt der Pfeil (a) die Expansionsrichtung an. Der Pfeil (b) bezeichnet die Drehrichtung der Wickeltrommel 4 während des Expansionsvorgangs, also beim Abwickeln des Solarzellenträgers 3 von der Wickeltrommel.

Fig. 1C zeigt den Solarzellenausleger 1 in seinem vollständig expandierten Einsatzzustand, wobei die Entfaltstruktur 2 vollständig entfaltet worden ist und der Solarzellenträger 3 vollständig von der Wickeltrommel 4 abgerollt worden ist.

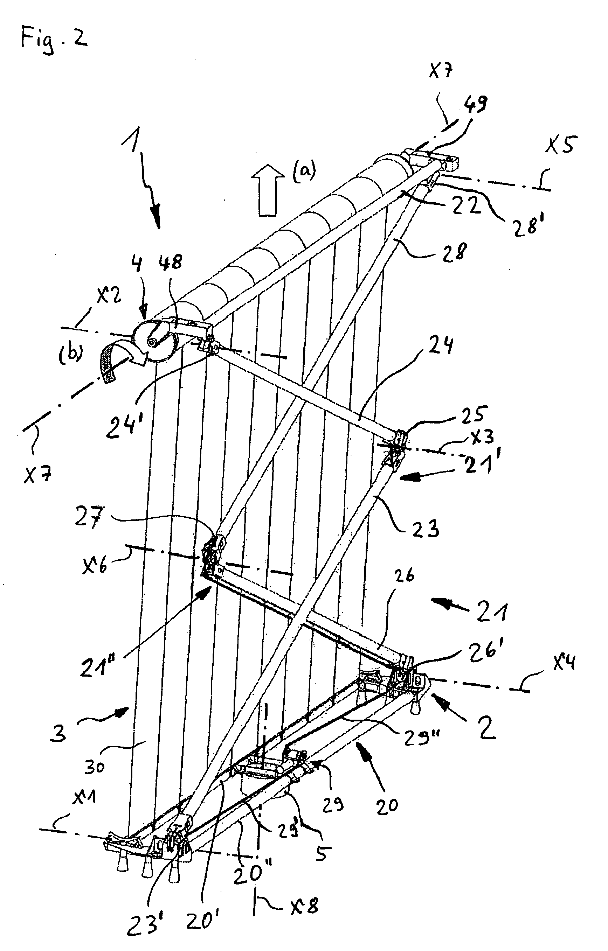

Fig. 2 ist eine vergrößerte Darstellung des in Fig. 1 B gezeigten teilweise entfalteten Zustands des Solarzellenauslegers 1.

Die Entfaltstruktur 2 weist eine Basiseinheit 20, eine Strukturverbindungseinheit 22 und eine die Basiseinheit 20 mit der Strukturverbindungseinheit 22 verbindende Entfaltungseinheit 21 auf.

Die Basiseinheit 20 ist aus einem rohrförmigen rechteckigen Rahmen gebildet, an dessen erstem Querrohr 20' der Solarzellenträger 3 befestigt ist. An den Enden des zweiten Querrohrs 20" ist die Entfaltungseinheit 21 in nachfolgend beschriebener Weise gelenkig gelagert.

Die Entfaltungseinheit 21 umfasst einen ersten Gelenkarm 21' und einen zweiten Gelenkarm 21". Der erste Gelenkarm 21' weist ein erstes rohrförmiges Element 23 auf, welches mit einem ersten Gelenk 23' an einem ersten Ende des zweiten Querrohrs 20" der Basiseinheit 20 um eine Achse X1 verschwenkbar angebracht ist, wobei die Achse X1 im wesentlichen rechtwinklig zu der vom Solarzellenträger 3 gebildeten Ebene verläuft. Der erste Gelenkarm 21' weist weiterhin ein zweites rohrförmiges Element 24 auf, welches mit einem zweiten Gelenk 24' an einem ersten Ende der Strukturverbindungseinheit 22 um eine Achse X2 schwenkbar gelenkig gelagert ist, wobei die Achse X2 parallel zur Achse X1 verläuft. Das zweite Gelenk 24' liegt auf derselben Seite des Solarzellenauslegers 1 wie das erste Gelenk 23'.

Das erste rohrförmige Element 23 und das zweite rohrförmige Element 24 sind an ihrem jeweiligen freien Ende mit einem mittleren Gelenk 25 miteinander so verbunden, dass sie zueinander um eine Achse X3 verschwenkbar sind, die ebenfalls parallel zur Achse X1 verläuft.

Der zweite Gelenkarm 21" ist spiegelbildlich zum ersten Gelenkarm 21' aufgebaut. Der zweite Gelenkarm 21" weist ein erstes rohrförmiges Element 26 auf, welches mit einem ersten Gelenk 26' am zweiten Ende des zweiten Querrohrs 20" der Basiseinheit 20 um eine Achse X4 verschwenkbar angebracht ist, wobei die Achse X4 im wesentlichen rechtwinklig zu der vom Solarzellenträger 3 gebildeten Ebene verläuft. Der zweite Gelenkarm 21" weist weiterhin ein zweites rohrförmiges Element 28 auf, welches mit einem zweiten Gelenk 28' am zweiten Ende der Strukturverbindungseinheit 22 um eine Achse X5 schwenkbar gelenkig gelagert ist, wobei die Achse X5 parallel zur Achse X4 verläuft. Das zweite Gelenk 28' liegt auf derselben Seite des Solarzellenauslegers 1 wie das erste Gelenk 26'.

Das erste rohrförmige Element 26 und das zweite rohrförmige Element 28 sind an ihrem jeweiligen freien Ende mit einem mittleren Gelenk 27 miteinander so verbunden, dass sie zueinander um eine Achse X6 verschwenkbar sind, die ebenfalls parallel zur Achse X4 verläuft.

Zur Betätigung der Entfaltungseinheit 21 ist am zweiten rohrförmigen Element 24 des ersten Gelenkarms 21' ein Seilzug 29' befestigt, der um eine am mittleren Gelenk 25 vorgesehene Umlenkrolle, entlang dem ersten rohrförmigen Element 23 und um eine am ersten Gelenk 23' vorgesehene Umlenkrolle zu einer im Bereich der Mitte der Basiseinheit 20 angeordneten Wickelrolle 29 führt. An der Wickelrolle 29 ist spiegelsymmetrisch ein zweiter Seilzug 29" vorgesehen, der dem zweiten Gelenkarm 21" zugeordnet ist und über eine Umlenkrolle am ersten Gelenk 26', entlang dem ersten rohrförmigen Element 26, über eine Umlenkrolle am mittleren Gelenk 27 verläuft und am zweiten rohrförmigen Element 28 befestigt ist. Durch Betätigen der Wickelrolle 29 mittels einem dieser zugeordneten Betätigungsmotor werden der erste Seilzug 29' und der zweite Seilzug 29" synchron aufgewickelt, wodurch die freie Länge des jeweiligen Seilzugs 29', 29" in gleichem Ausmaß verkürzt wird, was dazu führt, dass die Gelenkarme 21', 21" bestrebt sind, sich synchron aus der in den Fig. 1A und 1B gezeigten gefalteten Stellung in die in Fig. 1C gezeigte gestreckte Stellung zu bewegen, wodurch der Solarzellenausleger expandiert wird.

Dabei wandern die jeweiligen mittleren Gelenke 25, 27 des ersten Gelenkarms 21' beziehungsweise des zweiten Gelenkarms 21" jeweils von der einen Seite des Solarzellenauslegers 1 zur anderen Seite.

In Fig. 2 ist weiterhin zu erkennen, dass die Wickeltrommel 4 an der Strukturverbindungseinheit 22 mittels eines am jeweiligen Ende der Strukturverbindungseinheit 22 vorgesehenen Lagerbügels 48, 49 drehbar gelagert ist. Die Drehachse X7 der Wickeltrommel 4 verläuft in einer Ebene parallel zu einer von den Achsen X2 und X5 der jeweiligen zweiten Gelenke 24', 28' aufgespannten Ebene und in der Projektion im rechten Winkel zu den Achsen X2 und X5.

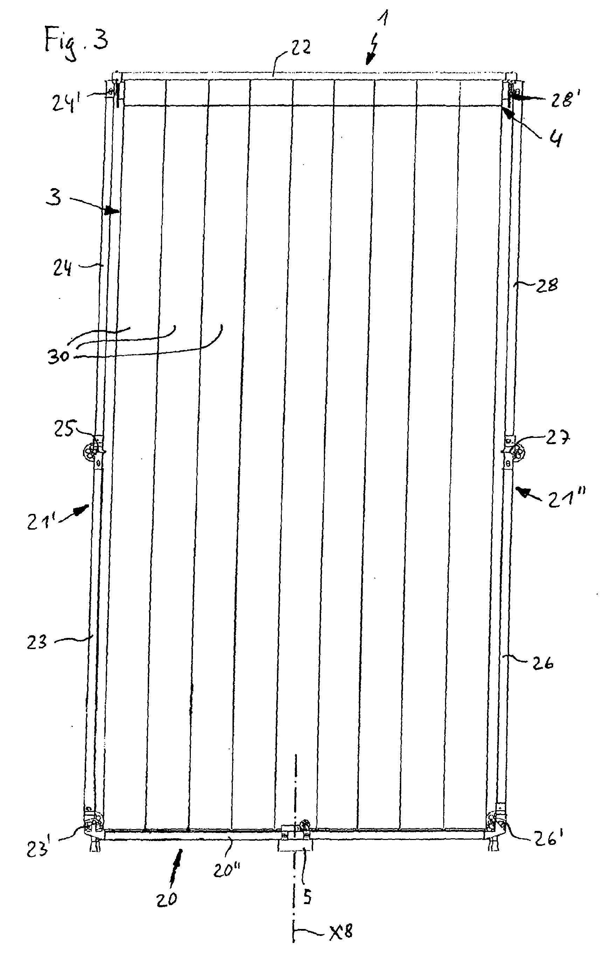

Der auf der Wickeltrommel 4 aufgerollte Solarzellenträger 3 besteht aus einer Mehrzahl von nebeneinander gelegenen streifenförmigen Trägerbahnen 30, wie anhand der Fig. 3 näher erläutert wird.

Fig. 3 zeigt den Solarzellenausleger 1 in vollständig expandiertem Zustand. Der erste Gelenkarm 21' und der zweite Gelenkarm 21" sind vollständig gestreckt, wobei die jeweiligen ersten Gelenke 23', 26' sowie die jeweiligen zweiten Gelenke 24', 28' einen im wesentlichen rechten Winkel bilden und wobei die jeweiligen mittleren Gelenke 25, 27 einen Winkel von 180° bilden.

Fig. 3 zeigt deutlich, dass der Solarzellenträger 3 aus einer Mehrzahl von nebeneinander angeordneten streifenförmigen Trägerbahnen 30 besteht. Diese Trägerbahnen 30 sind an ihren jeweils einander benachbarten Längsseiten, also zwischen der Wickeltrommel 4 und der Basiseinheit 20, nicht oder nicht starr miteinander verbunden. Die benachbarten streifenförmigen Trägerbahnen sind somit voneinander entkoppelt, so dass auf eine Trägerbahn 30 einwirkende Kräfte nicht seitlich auf eine benachbarte Trägerbahn 30 übertragen werden. Hierdurch wird erreicht, dass bei ungleichmäßigem Entfalten der Entfaltstruktur 2 auf den Solarzellenträger 3 über dessen Breite unterschiedlich einwirkende Zugkräfte keine Falten oder Beulen im Solarzellenträger 3 verursachen. Der aus den nebeneinander angeordneten streifenförmigen Trägerbahnen 30 bestehende Solarzellenträger 3 ist somit im entfalteten Zustand wesentlich ebener als ein vergleichbarer Solarzellenträger, der über die gesamte Breite des Solarzellenauslegers aus einem Stück besteht.

In Fig. 3 ist weiterhin zu erkennen, dass im Bereich der Mitte der Basiseinheit 20 ein zylinderförmiges Befestigungsmittel 5 vorgesehen ist, welches zur Anbringung des Solarzellenauslegers 1 an einem Fahrzeug, insbesondere an einem Raumfahrzeug dient. Das Befestigungsmittel 5 weist einen nicht gezeigten Stellantrieb auf, mit dem der Solarzellenauslegers 1 um eine parallel zur Längsrichtung der Trägerbahnen 30 verlaufende Achse X8 drehbar oder verschwenkbar ist. Die Achse X8 steht im wesentlichen senkrecht auf einer von den Achsen X1 und X4 der jeweiligen ersten Gelenke 23', 26' der beiden Gelenkarme 21', 21" aufgespannten Ebene.

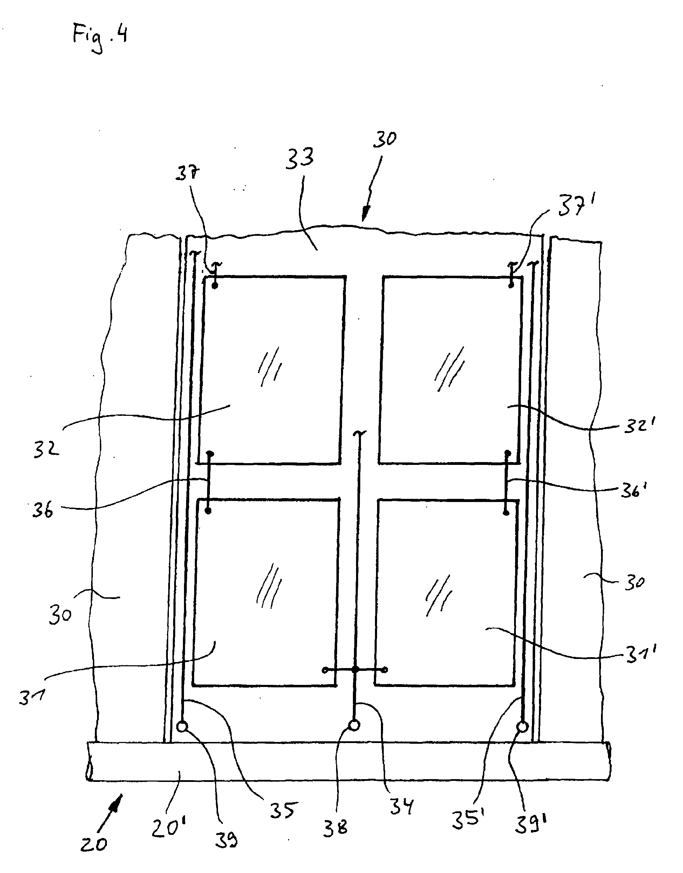

In Fig. 4 ist anhand einer Trägerbahn schematisch gezeigt, wie erste Solarzellen 31, 31' und zweite Solarzellen 32, 32' auf einem flexiblen Trägerbahnsubstrat 33 angeordnet sind. Die Solarzellen 31, 31', 32, 32' sind auf der dem Trägerbahnsubstrat 33 paarweise angeordnet. Zwischen zwei Solarzellen 31, 31'; 32, 32' eines jeweiligen Solarzellenpaars ist ein erster elektrischer Leiter 34 in der Mitte der Trägerbahn 30 vorgesehen. Dieser erste elektrische Leiter 34 ist mit den beiden Solarzellen 31, 31' des ersten Solarzellenpaars elektrisch verbunden. Der erste elektrische Leiter 34 verläuft in der Mitte der Trägerbahn weiter bis zu einer nächsten Gruppe von untereinander in Reihe geschalteten Solarzellen.

Bei dieser symmetrischen Anordnung der Solarzellen auf dem Trägerbahnsubstrat 33 sind die Solarzellen 31, 32 auf der einen Seite mittels eines Verbindungsleiters 36 untereinander verbunden und somit in Reihe geschaltet. Analog sind die Solarzellen 31', 32' auf der anderen Seite mittels eines Verbindungsleiters 36' elektrisch miteinander verbunden und so in Reihe geschaltet. In jeder der beiden Solarzellenreihen können noch weitere Solarzellen vorgesehen sein, wie durch die weiteren Verbindungsleiter 37, 37' an den zweiten Solarzellen 32, 32' angedeutet ist. Von der jeweils (nicht gezeigten) letzten Solarzelle einer Solarzellenreihe führt ein Rückleiter 35, 35' entlang des jeweiligen Randes der Trägerbahn 30 zurück bis in die Nähe des ersten Querrohrs 20' der Basiseinheit 20, an welcher die Trägerbahnen 30 befestigt sind. An dem der Basiseinheit 20 benachbarten jeweiligen Ende des Leiters 34 und der Rückleiter 35, 35' weisen diese Leiter jeweils eine elektrische Kontaktierung 38, 39, 39' auf, die auf der zugeordneten Trägerbahn 30 angebracht ist. Über diese Kontaktierungen 38, 39, 39' können die Solarzellen 31, 31', 32, 32' dieser Trägerbahn 30 mittels herkömmlicher Kabelverbindungen, die beispielsweise entlang der Basiseinheit 20 geführt sind, mit einem (nicht gezeigten) externen Verbraucher verbunden werden.

Diese symmetrische Anordnung der Solarzellen 31, 31', 32, 32' sowie der zugehörigen elektrischen Leiter 34, 35, 35', 36, 36', 37, 37' einer jeweiligen Trägerbahn sorgen dafür, dass von dieser elektrischen Struktur der Trägerbahn 30 erzeugte magnetische Momente innerhalb der Trägerbahn kompensiert werden.

Die anderen Trägerbahnen 30 sind in gleicher Weise mit einer symmetrischen Solarzellenanordnung versehen.

Da die Wickeltrommel 4 auf der von der Basiseinheit 20 abgewandten Seite des Solarzellenauslegers (in Fig. 3 oben) vorgesehen ist, ist es nicht erforderlich, die elektrischen Kontaktierungen für die jeweiligen Solarzellen einer Trägerbahn 30 mittels Schleifringen von der Trägerbahn 30 nach außen abzuleiten, wie dies der Fall wäre, wenn die Wickeltrommel im Bereich der Basiseinheit 20 vorgesehen wäre.

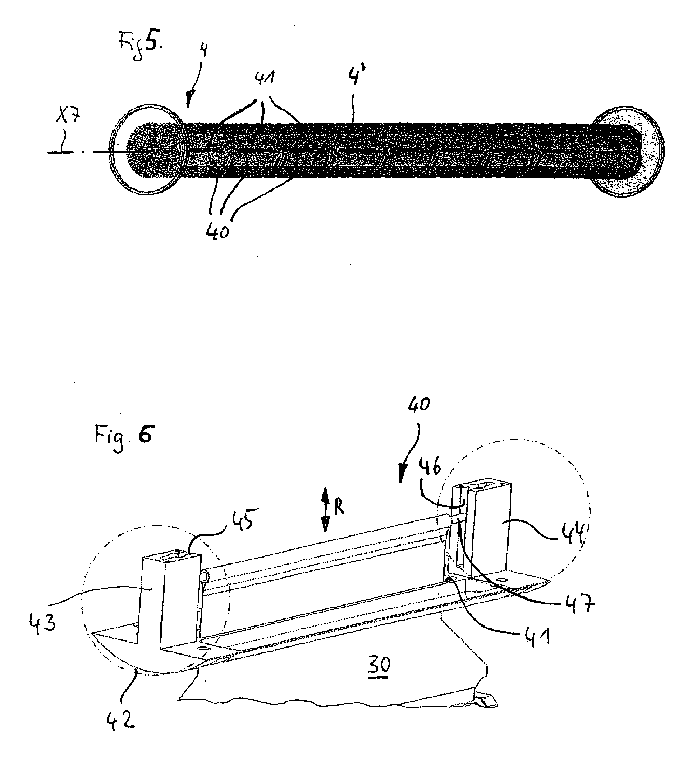

Zur Aufnahme der einzelnen streifenförmigen Trägerbahnen 30 des Solarzellenträgers 3 ist die Wickeltrommel 4 mit einer Mehrzahl von in Längsrichtung der Wickeltrommel 4 nebeneinander angeordneten Halterungseinrichtungen 40 versehen, wie in Fig. 5 gezeigt ist. Jede Halterungseinrichtung 40 ist mit einer teilzylindrischen Oberfläche 42 im wesentlichen bündig mit der Oberfläche der Wickeltrommel 4 in einer schlitzartigen Ausnehmung 4' der Wickeltrommel aufgenommen und weist einen parallel zur Achse X7 der Wickeltrommel 4 verlaufenden Längsschlitz 41 auf, durch den die Trägerbahn 30 in die Halterungseinrichtung 40 einführbar und dort arretierbar ist, wie in Fig. 6 gezeigt ist.

In Fig. 6 ist der Aufbau einer derartigen, im Inneren der Wickeltrommel 4 vorgesehenen Halterungseinrichtung 40 gezeigt. Die Halterungseinrichtung 40 ist an ihrer in Fig. 6 unten gelegenen Außenseite mit einer teilzylindrischen Oberfläche 42 versehen, deren Radius im wesentlichen dem Radius der Wickeltrommel 4 entspricht. An ihrem jeweiligen Längsende weist die Halterungseinrichtung einen in Radialrichtung verlaufenden Führungsblock 43, 44 auf, wobei die Führungsblöcke 43, 44 dem jeweiligen Ende des Längsschlitzes 41 benachbart sind. Auf den einander zugewandten Seiten sind die Führungsblöcke 43, 44 mit jeweils einer Nut 45, 46 versehen, die jeweils im rechten Winkel zum Längsschlitz 41 in Radialrichtung verläuft. Ein Befestigungsbalken 47 ist mit seinem ersten Ende in die Nut 45 des ersten Führungsblocks 43 und mit seinem zweiten Ende in die Nut 46 des zweiten Führungsblocks 44 eingeführt und innerhalb der Nut in Radialrichtung R der Wickeltrommel 4 verschiebbar federnd gelagert. Das Ende der durch den Längsschlitz 41 hindurchgeführten Trägerbahn 30 ist am Befestigungsbalken 47 fest angebracht.

Auf diese Weise kann sich der mit der Trägerbahn 30 versehene Befestigungsbalken 47 in Radialrichtung R entlang der Nuten 45, 46 gegen die Kraft einer in dem jeweiligen Führungsblock 43, 44 vorgesehenen und in Fig. 5 nicht dargestellten Feder hin und her (in Fig. 5 auf und ab) bewegen. Diese Beweglichkeit des Befestigungsbalkens 47 erlaubt es, thermisch bedingte Längenänderungen der jeweiligen Trägerbahn 30 zu kompensieren und dabei zu gewährleisten, dass die jeweilige Trägerbahn 30 zwischen der Basiseinheit 20 und der Wickeltrommel 4 stets gespannt ist und eine möglichst ebene Fläche ohne Falten und Beulen bildet. Im Idealfall können auf diese Weise Temperaturen zwischen + 100° C und - 200° C kompensiert werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Solarzellenausleger
- 2: Entfaltstruktur
- 3: Solarzellenträger
- 4: Wickeltrommel
- 4': schlitzartige Ausnehmung
- 5: Befestigungsmittel
- 20: Basiseinheit
- 20': erstes Querrohr
- 20": zweites Querrohr
- 21: Entfaltungseinheit
- 21': erster Gelenkarm
- 21": zweiter Gelenkarm
- 22: Strukturverbindungseinheit
- 23: rohrförmiges Element
- 23': erstes Gelenk
- 24: zweites rohrförmiges Element
- 24': zweites Gelenk
- 25: mittleres Gelenk
- 26: erstes rohrförmiges Element
- 26': erstes Gelenk
- 27: mittleres Gelenk
- 28: zweites rohrförmiges Element
- 28': zweites Gelenk
- 29: Wickelrolle
- 29': erster Seilzug
- 29": zweiter Seilzug

- 30: Trägerbahn
- 31: Solarzelle
- 31': Solarzelle
- 32: Solarzelle
- 32': Solarzelle
- 33: Trägerbahnsubstrat
- 34: elektrischer Leiter
- 35: Rückleiter
- 35': Rückleiter
- 36: Verbindungsleiter
- 36': Verbindungsleiter
- 37: Verbindungsleiter
- 37': Verbindungsleiter
- 38: elektrische Kontaktierung
- 39: elektrische Kontaktierung
- 39': elektrische Kontaktierung
- 40: Halterungseinrichtung
- 41: Längsschlitz
- 42: teilzylindrische Oberfläche
- 43: Führungsblock
- 44: Führungsblock
- 45: Nut
- 46: Nut
- 47: Befestigungsbalken
- 48: Lagerbügel
- 49: Lagerbügel

- Pfeil (a): Expansionsrichtung
- Pfeil (b): Drehrichtung
- X1 - X8: Achse
- R: Radialrichtung

## Patentansprüche

1. Solarzellenausleger, der aus einem kompakten verstaubaren Lagerzustand in einen expandierten Einsatzzustand bringbar ist, mit
- einer Entfaltstruktur (2) und
- einem an der Entfaltstruktur (2) gehalterten und zumindest eine mit Solarzellen (31, 31', 32, 32') versehene Trägerbahn (30) aufweisenden Solarzellenträger (3)
**dadurch gekennzeichnet,**
- **dass** die Solarzellen (31, 31', 32, 32') flexibel ausgebildet sind,
- **dass** der Solarzellenträger (3) flexibel und aufrollbar ausgebildet ist und
- **dass** die Entfaltstruktur (2) eine Aufrolleinrichtung für den Solarzellenträger (3) aufweist.

2. Solarzellenausleger nach Anspruch 1,
**dadurch gekennzeichnet,**
**dass** die Aufrolleinrichtung eine Wickeltrommel (4) aufweist, auf die der Solarzellenträger (3) aufrollbar ist.

3. Solarzellenausleger nach Anspruch 1 oder 2,
**dadurch gekennzeichnet,**
**dass** der Solarzellenträger (3) aus einer Mehrzahl von nebeneinander angeordneten streifenförmigen Trägerbahnen (30) besteht.

4. Solarzellenausleger nach Ansprüche 2 oder 3,
**dadurch gekennzeichnet,**
**dass** die Wickeltrommel (4) für jede Trägerbahn (30) eine Halterungseinrichtung (40) aufweist.

5. Solarzellenausleger nach Anspruch 4,
**dadurch gekennzeichnet,**
**dass** die Halterungseinrichtung (40) innerhalb der Wickeltrommel (4) vorgesehen ist, wobei die Wickeltrommel (4) und/oder die Halterungseinrichtung (40) einen sich in Axialrichtung der Wickeltrommel erstreckenden Längsschlitz (41) aufweist, durch den die Trägerbahn (30) in die Halterungseinrichtung (40) einführbar und dort arretierbar ist.

6. Solarzellenausleger nach Anspruch 5,
**dadurch gekennzeichnet,**
**dass** die Halterungseinrichtung (40) jeweils einen sich in Längsrichtung der Wickeltrommel (4) erstreckenden Befestigungsbalken (47) für die jeweilige Trägerbahn (30) aufweist.

7. Solarzellenausleger nach Anspruch 6,
**dadurch gekennzeichnet,**
**dass** der Befestigungsbalken (47) im Bereich seiner axialen Enden in Radialrichtung (R) der Wickeltrommel (4) in der Halterungseinrichtung (40) federnd gelagert ist.

8. Solarzellenausleger nach einem der vorhergehenden Ansprüche,
**dadurch gekennzeichnet,**
**dass** die Entfaltstruktur (2) versehen ist mit
- einer Basiseinheit (20),
- einer Strukturverbindungseinheit (22) und
- einer die Basiseinheit (20) und die Strukturverbindungseinheit (22) miteinander verbindenden Entfaltungseinheit (21).

9. Solarzellenausleger nach Anspruch 8,
**dadurch gekennzeichnet,**
**dass** die Entfaltungseinheit (21) einen ersten Gelenkarm (21') und einen zweiten Gelenkarm (21") aufweist, die jeweils mit einem ersten Gelenk (23', 26') an der Basiseinheit (20) und jeweils mit einem zweiten Gelenk (24', 28') an der Strukturverbindungseinheit (22) gelenkig angebracht sind.

10. Betätigungseinrichtung nach Anspruch 9,
**dadurch gekennzeichnet,**
**dass** jeder Gelenkarm (21'; 21") mit zumindest einem zwischen dem ersten Gelenk (23'; 26') und dem zweiten Gelenk (24'; 28') vorgesehenen weiteren Gelenk (25; 27) versehen ist.

11. Solarzellenausleger nach einem der Ansprüche 8 bis 10,
**dadurch gekennzeichnet,**
**dass** die Basiseinheit (20) Befestigungsmittel (5) zur Anbringung des Solarzellenauslegers (1) an einem Fahrzeug, insbesondere an einem Raumfahrzeug, aufweist.

12. Solarzellenausleger nach Anspruch 11,
**dadurch gekennzeichnet,**
**dass** die Befestigungsmittel (5) einen Stellantrieb aufweisen, mit dem der Solarzellenausleger (1) um eine parallel zur Längsrichtung der Trägerbahn (30) verlaufende Achse (X8) verschwenkbar ist.

13. Solarzellenausleger nach einem der Ansprüche 8 bis 12,
**dadurch gekennzeichnet,**
**dass** die Wickeltrommel (4) im Bereich der Strukturverbindungseinheit (22) vorgesehen ist.

14. Solarzellenausleger nach Anspruch 13,
**dadurch gekennzeichnet,**
**dass** jede Trägerbahn (30) elektrische Kontaktierungen (38, 39, 39') für eine elektrische Verbindung der auf ihr vorgesehenen Solarzellen (31, 31', 32, 32') mit einem externen Verbraucher aufweist, wobei die Kontaktierungen (38, 39, 39') der Basiseinheit (20) benachbart vorgesehen sind.

15. Solarzellenausleger nach einem der vorhergehenden Ansprüche,
**dadurch gekennzeichnet,**
**dass** die Solarzellen (31, 31', 32, 32') als flexible Dünnfilmzellen ausgebildet sind.
